# FASCICULE DE BREVET EUROPEEN

(11) **EP 3 002 159 B1**
(45) Date de publication et mention de la délivrance du brevet: **01.03.2017**
(21) Numéro de dépôt: 15182706.0
(22) Date de dépôt: 27.08.2015
(51) Int. Cl.: B60R 19/34

(54) **ENSEMBLE DE PARE-CHOCS POUR VÉHICULE AUTOMOBILE COMPRENANT UN ABSORBEUR EN MATÉRIAU COMPOSITE**
STOSSSTANGENANORDUNG FÜR KRAFTFAHRZEUG, DIE EINEN STOSSDÄMPFER AUS VERBUNDMATERIAL UMFASST
BUMPER ASSEMBLY FOR A MOTOR VEHICLE COMPRISING AN ABSORBER MADE OF COMPOSITE MATERIAL

(30) Priorité: 02.10.2014 FR 1459417
(43) Date de publication de la demande: 06.04.2016
(73) Titulaire: Automotive Exteriors Europe, 69007 Lyon (FR)
(72) Inventeur: BORDE, Patrick, 25200 MONTBELIARD (FR)
(74) Mandataire: Remy, Vincent Noel Paul

(56) Documents cités:
- WO-A1-2014/118060
- DE-A1-102012 019 923
- FR-A1- 2 761 434

## Description

La présente invention concerne un ensemble de pare-chocs pour véhicule automobile, comprenant :
- une traverse destinée à s'étendre suivant une direction transversale du véhicule automobile,
- au moins une platine destinée à être fixée à un longeron du véhicule automobile,
- au moins un absorbeur de chocs reliant la traverse à la platine, ledit absorbeur de choc comprenant une partie tubulaire en matériau composite, s'étendant selon un axe longitudinal, comprenant une extrémité amont appliquée contre la platine et une extrémité aval appliquée contre la traverse, l'extrémité amont et/ou l'extrémité aval comprenant un épaulement s'étendant sensiblement radialement à partir de la partie tubulaire,
- un dispositif de fixation assurant la fixation de l'absorbeur à la traverse ou la platine par au moins un moyen de fixation.

Des ensembles de pare-chocs du type précité sont connus et font partie de l'équipement standard d'un véhicule automobile. Ces ensembles de pare-chocs, disposés à l'avant ou l'arrière du véhicule automobile, permettent d'amortir l'impact des chocs reçus par le véhicule sur sa face avant ou arrière, en absorbant une partie de l'énergie de ces chocs via les absorbeurs.

Généralement, les ensembles de pare-chocs sont réalisés au moins en partie en acier. Ces ensembles présentent l'inconvénient d'être lourds, et d'augmenter par conséquent la consommation et l'inertie du véhicule automobile.

FR 2 761 434 A1 décrit un ensemble de pare-chocs pour véhicule automobile selon le préambule de la revendication 1.

Il existe également des ensembles de pare-chocs en aluminium. Si ces ensembles sont significativement allégés par rapport aux ensembles en acier, ils présentent l'inconvénient d'être chers.

Un bon compromis poids-prix est obtenu avec des ensembles de pare-chocs en matériaux composites. Le document FR-3 001 680 décrit par exemple un tel ensemble de pare-chocs.

Cependant, les fixations entre les pièces du pare-chocs et la traverse ou des structures du véhicule, telle que le longeron, sont fortement sollicitées, et les pare-chocs en matériaux composites manquent de rigidité dans ces régions. Il en résulte que les points de fixation entre les pièces du pare-chocs et la traverse ou la structure du véhicule présentent des faiblesses, ce qui peut entraîner une liaison non robuste entre la traverse et la structure du véhicule. En effet, il n'est pas possible de souder la pièce en matériau composite à une pièce en métal, ce qui permettrait d'assurer une fixation robuste.

Un objectif de l'invention est d'obtenir un ensemble de pare-chocs offrant un bon compromis poids-prix, présentant des points de fixation avec le reste des pièces, que ce soit traverse ou longeron, d'une résistance satisfaisante et d'une robustesse accrue.

A cet effet, l'invention a pour objet un dispositif de fixation caractérisé en ce qu'il comprend au moins une pièce de fixation métallique comprenant une partie de fixation, fixée à la platine ou à la traverse, et une partie de blocage s'étendant sur l'épaulement de l'absorbeur de sorte que l'épaulement est disposé entre la platine ou la traverse et la partie de blocage.

Cette invention permet d'obtenir un ensemble de pare-chocs efficace présentant un bon compromis poids-prix, puisque la partie destinée à s'écraser en cas de choc est constituée de matériaux composites, ce qui permet également d'absorber l'énergie du choc plus efficacement que du métal. De plus les parties de fixation de l'ensemble du pare-chocs avec le reste des pièces du véhicule sont réalisées en métal, ce qui offre une meilleure rigidité que les matériaux composites et donc une liaison plus robuste entre l'absorbeur et la traverse et/ou la platine.

L'ensemble de pare-chocs selon l'invention peut comprendre une ou plusieurs des caractéristiques suivantes, prise(s) isolément ou suivant toute(s) combinaison(s) techniquement possible(s) :
- la fixation entre la partie tubulaire et la platine ou la traverse se fait par écrasement de l'épaulement par la partie de blocage de la pièce de fixation lors de la mise en place du moyen de fixation ;
- la pièce de fixation comprend une partie de liaison reliant la partie de fixation à la partie de blocage, ladite partie de liaison présentant une dimension selon l'axe longitudinal inférieure à la dimension selon l'axe longitudinale de l'épaulement ;
- le moyen de fixation entre la partie de fixation de la pièce de fixation et la traverse ou la platine est une vis ;
- l'épaulement s'étend à partir d'une paroi interne ou externe de la partie tubulaire ;
- la partie de blocage de la pièce de fixation est en forme d'anneau ou de disque, comprenant un contour sensiblement complémentaire de la section de la partie tubulaire ;
- le dispositif de fixation comprend deux pièces métalliques comprenant chacune une partie de fixation et une partie de blocage, telles que l'épaulement soit entre les parties de blocage des deux pièces métalliques ;
- les parties de fixation des deux pièces métalliques sont superposées ;
- la partie de blocage d'une des plaques métalliques s'étend contre la paroi de la partie tubulaire, opposée à la paroi comprenant l'épaulement ; et
- tout ou une ou plusieurs parties du dispositif de fixation viennent de matière avec la traverse ou la platine.

L'invention sera mieux comprise à la lecture de la description qui va suivre, donnée uniquement à titre d'exemple et faite en se référant aux dessins annexés sur lesquels :
- la figure 1 est une vue en perspective, de trois-quarts avant, d'un ensemble de pare-chocs selon un premier mode de réalisation de l'invention ;
- les figures 2 à 7 sont des vues en coupe de la fixation entre un absorbeur de chocs et une platine selon plusieurs modes de réalisation.

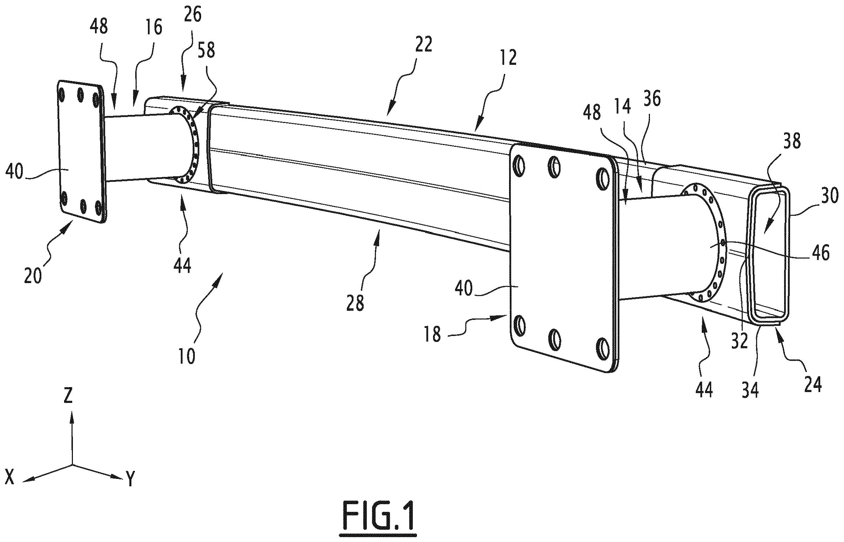

Dans tout ce qui suit, les termes d'orientation s'entendent par rapport au repère orthogonal pris en référence au sens de déplacement normal du véhicule automobile, représenté sur la figure 1 et dans lequel on distingue :
- un axe longitudinal X, horizontal s'étendant de l'arrière vers l'avant ;
- un axe transversal Y, horizontal s'étendant de la droite vers la gauche ; et
- un axe vertical Z, s'étendant du bas vers le haut.

Le terme « horizontal » est défini par rapport au plan XY, le terme « vertical » est défini par rapport au plan XZ ou YZ.

Un ensemble de pare-chocs avant 10 est représenté sur la figure. Il appartient à un véhicule automobile (non représenté) comprenant un châssis (non représenté) et deux longerons (non représentés). Chaque longeron s'étend suivant la direction longitudinale X, et les longerons sont espacés l'un de l'autre suivant la direction transversale Y. L'ensemble de pare-chocs 10 peut être installé à l'arrière et/ou à l'avant du véhicule automobile.

La description va être faite par rapport à un ensemble de pare-chocs avant, il est cependant entendu que l'invention s'applique également à un ensemble de pare-chocs arrière.

L'ensemble de pare-chocs 10 représenté sur la figure 1 comprend une traverse 12, deux absorbeurs de chocs 14, 16, et deux platines 18, 20 de fixation des absorbeurs de chocs 14, 16 aux longerons du véhicule automobile.

La traverse 12 est une poutre 22 s'étendant sensiblement suivant la direction transversale Y. En d'autres termes, les extrémités transversales 24, 26 de la traverse 12 sont alignées selon la direction transversale Y.

La traverse 12 est en particulier légèrement arquée, ou bombée, vers l'avant dans le plan horizontal. La région médiane 28 de la traverse 12, qui est sensiblement à équidistance des extrémités transversales 24, 26, est ainsi disposée en avant des extrémités transversales 24, 26 suivant la direction longitudinale X.

Comme représenté sur la figure 1, la traverse 12 est creuse. Elle comprend une paroi avant 30, sensiblement verticale, une paroi arrière 32, sensiblement verticale, ainsi que des parois inférieures et supérieures 34, 36 joignant les parois avant 30 et arrière 32. Ces parois 30, 32, 34 et 36 encadrent une chambre intérieure 38 de la traverse 12.

La chambre intérieure 38 s'étend transversalement sur toute la traverse 12. Elle débouche dans les extrémités transversales 24, 26 de la traverse 12. Elle présente une section longitudinale de forme sensiblement rectangulaire.

Chaque platine 18, 20 s'étend sensiblement suivant la direction verticale Z. Chaque platine 18, 20 comprend une face arrière 40 et une face avant 42. La face arrière 40 est destinée à être fixée à un longeron du véhicule, et la face avant 42 est solidarisée à un absorbeur de chocs 14, 16.

Chaque absorbeur de chocs 14, 16 est interposé entre la traverse 12 et un longeron du véhicule automobile. Chaque absorbeur de chocs 14, 16 est adapté pour se déformer sous l'effet d'une force de compression longitudinale exercée sur lui-même.

Chaque absorbeur de chocs 14, 16 comprend une partie tubulaire 44 en matériau composite s'étendant sensiblement suivant la direction X. On entend par matériau composite une matrice, faite d'un composant, et un renfort, fait d'un autre composant non miscible avec le précédent. On pourra par exemple prendre une matrice plastique avec un renfort fait de fibres naturelles ou synthétiques, telles que des fibres de verre.

Cette partie tubulaire 44 comprend une extrémité arrière 46 et une extrémité avant 48. L'extrémité arrière 46 est fixée à une platine 18, 20, et l'extrémité avant 48 est fixée à la traverse 12.

A au moins une des extrémités 46, 48, une des parois de la partie tubulaire, interne 54 ou externe 56, présente un épaulement 50. Cet épaulement 50 s'étend sensiblement radialement à partir de la partie tubulaire 44 et est d'une seule pièce avec la partie tubulaire 44. A cette extrémité, un dispositif de fixation 52 est utilisé pour fixer la partie tubulaire 44 à une platine 18, 20 ou à la traverse 12.

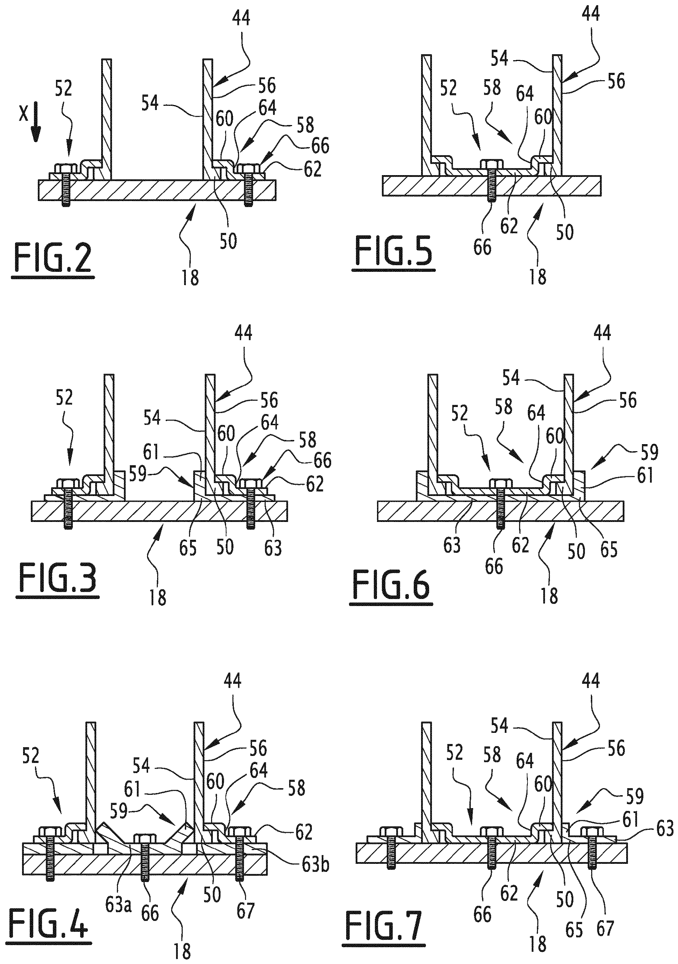

Sur les figures 2 à 7, sont représentées différentes variantes du dispositif de fixation 52 entre la partie tubulaire 44 et la platine 18. Cette liste est non exhaustive et on pourra, par exemple, combiner les différentes variantes présentées ci-dessous.

Dans la suite de la description, il sera considéré que l'épaulement 50 s'étend à l'extrémité arrière 46, pour la fixation à la platine 18, 20. Il est cependant entendu que la fixation entre la traverse 12 et l'extrémité avant 48 peut également être réalisée au moyen du dispositif de fixation 52 et de l'épaulement 50, c'est-à-dire que la partie tubulaire 44 aurait deux épaulements 50, un à chacune de ses extrémités 46, 48. Alternativement, seule la fixation de la traverse 12 peut être réalisée au moyen d'un tel dispositif de fixation 52.

Dans l'exemple représenté à la figure 2, l'épaulement 50 s'étend à partir de la paroi externe 56. Le dispositif de fixation 52 comprend une pièce de fixation 58 métallique. Cette pièce de fixation 58 est en forme d'anneau et entoure l'extrémité arrière 46 de la partie tubulaire 44. Par entourer, on entend que le contour interne de la pièce de fixation 58 est sensiblement complémentaire au contour externe de l'extrémité arrière 46 de la partie tubulaire 44. Cette pièce de fixation 58 comprend une partie de blocage 60 et une partie de fixation 62. La partie de fixation 62 s'étend dans un plan transversal et la partie de blocage s'étend dans un autre plan transversal parallèle au plan de la partie de fixation. Une partie de liaison 64, reliant la partie de fixation 62 et la partie de blocage 60, s'étend dans un plan longitudinal perpendiculaire aux plans de la partie de blocage et de la partie de fixation. La partie de liaison 64 est telle que la partie de blocage 60 appuie contre l'épaulement 50 et que la partie de fixation 62 s'étend contre la platine 18 à l'extérieur de la partie tubulaire 44. La dimension de la partie de liaison 64 selon la direction longitudinale est inférieure ou égale à l'épaisseur de l'épaulement, mesurée selon la direction longitudinale. La pièce de fixation 58 est fixée à la platine 18 par au moins un moyen de fixation 66, par exemple une vis, traversant la platine 18 et la partie de fixation 62. Ce moyen de fixation 66 pourra par exemple être composé de plusieurs vis réparties sur le pourtour de la partie de fixation 62. Selon un autre mode de réalisation, le moyen de fixation 66 est une soudure entre la pièce de fixation 58 et la platine 18. Lorsque la dimension longitudinale de la partie de liaison 64 est inférieure à celle de l'épaulement 50, l'épaulement est légèrement écrasé entre la pièce de fixation 58 et la platine 18 par la partie de blocage 60, après mise en place du moyen de fixation 66. Cela permet une fixation robuste remplaçant de manière satisfaisante une fixation par soudure.

Une autre variante est présentée sur la figure 3. L'épaulement 50 s'étend à partir de la paroi externe 56. Le dispositif de fixation 52 comprend deux pièces de fixation 58, 59 métalliques. Les pièces de fixation 58, 59 sont en forme d'anneau et entourent la partie tubulaire 44. Les pièces de fixation 58, 59 comprennent chacune une partie de blocage 60, 61 et une partie de fixation 62, 63. Une des pièces de fixation 58 est sensiblement identique à la pièce de fixation décrite en référence à la figure 2. La deuxième pièce de fixation 59 présente une partie coudée 65, telle que la partie de blocage 61 s'appuie sur la paroi interne 54 de la partie tubulaire 44 et la partie de fixation 63 s'étend entre l'extrémité arrière 46 de la partie tubulaire 44 et la platine 18 à l'extérieur de la partie tubulaire 44. Selon un mode de réalisation, la pièce de fixation 59 peut être d'une seule pièce avec la platine 18. Le dispositif de fixation 52 est fixé à la platine 18 par un moyen de fixation 66, par exemple une vis, traversant la platine 18 et les deux parties de fixation 62, 63 des deux pièces de fixation 58, 59. Lorsque la dimension longitudinale de la partie de liaison 64 de la pièce de fixation 58 est inférieure à celle de l'épaulement 50, l'épaulement est légèrement écrasé entre les deux pièces de fixation 58, 59 par les parties de blocage 60, 61, après mise en place du moyen de fixation 66.

Dans l'exemple de la figure 4, l'épaulement 50 s'étend à partir de la paroi externe 56. Le dispositif de fixation 52 comprend deux pièces de fixation 58, 59 métalliques. Une des pièces de fixation 58 est sensiblement identique à la pièce de fixation décrite en référence à la figure 2. La deuxième pièce de fixation 59 est une plaque métallique, telle que la section de la partie tubulaire 44 soit inscrite dans cette pièce. Typiquement, la pièce de fixation 59 pourra être en forme de disque ou de forme similaire à la platine. Selon un mode de réalisation, la pièce de fixation 59 peut être d'une seule pièce avec la platine 18. La pièce de fixation 59 comprend une partie de blocage 61 et deux parties de fixation 63a, 63b. La pièce de fixation 59 est située entre la platine 18 et la partie tubulaire 44. Une partie de fixation 63a s'étend contre la platine 18 à l'intérieur de la partie tubulaire 44. L'autre partie de fixation 63b s'étend contre la platine 18 à l'extérieur de la partie tubulaire 44. La partie de blocage 61 s'étend entre la partie de fixation interne 63a et la paroi interne 54 de la partie tubulaire 44, et est réalisée, par exemple, par découpe pliée de la partie de fixation interne 63a. Le dispositif de fixation 52 est fixé à la platine par au moins deux moyens de fixation 66, 67, par exemple des vis. Un des moyens de fixation 66 traverse la partie de fixation interne 63a de la pièce de fixation 59 et la platine 18. L'autre moyen de fixation 67 traverse la partie de fixation 62 de la pièce de fixation 58, la partie de fixation externe 63b de la pièce de fixation 59 et la platine 18. Lorsque la dimension longitudinale de la partie de liaison 64 de la pièce de fixation 58 est inférieure à celle de l'épaulement 50, l'épaulement est légèrement écrasé entre la platine 18 et les deux pièces de fixation 58, 59 par les parties de blocage 60, 61, après mise en place du moyen de fixation 66.

Une autre variante est représentée sur la figure 5. L'épaulement 50 s'étend à partir de la paroi interne 54. Le dispositif de fixation 52 comprend une pièce de fixation 58 métallique. Cette pièce de fixation 58 est en forme de disque et est entourée par la partie tubulaire 44. Cette pièce de fixation 58 comprend une partie de blocage 60 et une partie de fixation 62. La pièce de fixation 58 comprend une partie de liaison 64 similaire à celle décrite en référence à la figure 2, telle que la partie de blocage 60 appuie contre l'épaulement 50 et que la partie de fixation 62 s'étend contre la platine 18 à l'intérieur de la partie tubulaire 44. La pièce de fixation 58 est fixée à la platine 18 par un moyen de fixation 66, par exemple une vis, traversant la platine 18 et la partie de fixation 62. Le moyen de fixation 66 s'étend, par exemple, selon l'axe de la partie tubulaire 44. Lorsque la dimension longitudinale de la partie de liaison 64 de la pièce de fixation 58 est inférieure à celle de l'épaulement 50, l'épaulement est légèrement écrasé entre la pièce de fixation 58 et la platine 18 par la partie de blocage 60, après mise en place du moyen de fixation 66.

Une autre possibilité est représentée sur la figure 6. L'épaulement 50 s'étend à partir de la paroi interne 54. Le dispositif de fixation 52 comprend deux pièces de fixation 58, 59 métalliques. Les pièces de fixation 58, 59 sont en forme de disques et ont chacune un contour sensiblement complémentaire de la section de la partie tubulaire 44. Les pièces de fixation 58, 59 comprennent chacune une partie de blocage 60, 61 et une partie de fixation 62, 63. Une des pièces de fixation 58 est sensiblement identique à la pièce de fixation décrite en référence à la figure 5. La deuxième pièce de fixation 59 présente une partie coudée 65, telle que la partie de blocage 61 s'appuie sur la paroi externe 56 de la partie tubulaire 44 et la partie de fixation 63 s'étend entre l'extrémité arrière 46 de la partie tubulaire 44 et la platine 18 à l'intérieur de la partie tubulaire 44. Selon un mode de réalisation, la pièce de fixation 59 peut être d'une seule pièce avec la platine 18. Le dispositif de fixation 52 est fixé à la platine 18 par un moyen de fixation 66, par exemple une vis, traversant la platine 18 et les deux parties de fixation 62, 63 des deux pièces de fixation 58, 59. Lorsque la dimension longitudinale de la partie de liaison 64 de la pièce de fixation 58 est inférieure à celle de l'épaulement 50, l'épaulement est légèrement écrasé entre les deux pièces de fixation 58, 59 par les parties de blocage 60, 61, après mise en place du moyen de fixation 66.

Une autre variante est représentée sur la figure 7. L'épaulement 50 s'étend à partir de la paroi interne 54. Le dispositif de fixation 52 comprend deux pièces de fixation 58, 59 métalliques. Les pièces de fixation 58, 59 comprennent chacune une partie de blocage 60, 61 et une partie de fixation 62, 63. Une des pièces de fixation 58 est sensiblement identique à la pièce de fixation décrite en référence à la figure 5. L'autre pièce de fixation 59 est en forme d'anneau et entoure la partie tubulaire 44. La pièce de fixation 59 présente une partie coudée 65, telle que la partie de blocage 61 s'appuie sur la paroi externe 56 de la partie tubulaire 44, et que la partie de fixation 63 s'étend contre la platine 18 à l'extérieur de la partie tubulaire 44. Le dispositif de fixation 52 est fixé à la traverse par au moins deux moyens de fixation 66, 67, par exemple des vis, l'un 66 traversant la platine 18 et la pièce de fixation en forme de disque 58, l'autre 67 traversant la platine 18 et l'autre pièce de fixation 59. Lorsque la dimension longitudinale de la partie de liaison 64 de la pièce de fixation 58 est inférieure à celle de l'épaulement 50, l'épaulement est légèrement écrasé entre la pièce de fixation 58 et la platine 18 par la partie de blocage 60, après mise en place du moyen de fixation 66.

Selon un mode de réalisation de l'invention, tout ou partie du dispositif de fixation 52 vient de matière avec la platine 18.

La fixation entre la partie tubulaire 44 et les platines 18, 20 ou la traverse 12 est donc assurée par le fait que l'épaulement 50 soit enserré et légèrement écrasé entre plusieurs pièces métalliques, ce qui assure une liaison robuste, bien qu'il est impossible de réaliser de soudure entre un matériau composite et des pièces métalliques.

En dehors de l'épaulement, la partie tubulaire 44 peut être telle que décrite dans le document FR-3 001 680. Elle peut par exemple être composée de deux demi-coquilles telles que décrites dans le document, et/ou possédée une âme centrale métallique.

Chaque ensemble de pare-chocs décrit ci-dessus présente donc un bon compromis poids-prix grâce à l'emploi de matériaux composites.

En outre, cet ensemble de pare-chocs permet d'avoir des fixations plus rigides grâce à l'emploi de pièces métalliques.

Par ailleurs, en cas de chocs, la partie tubulaire 44 va s'écraser et permettre une meilleure dispersion d'énergie qu'avec un absorbeur de chocs en métal. L'ensemble de pare-chocs selon l'invention offre donc une meilleure efficacité en cas de chocs.

On notera également que chaque ensemble de pare-chocs avant décrit ci-dessus est facilement adaptable pour constituer un ensemble arrière de véhicule automobile. Il suffit à cet effet de pivoter l'ensemble avant de 180° autour de l'axe vertical Z et de le fixer aux extrémités arrières des longerons du véhicule.

## Revendications

1. Ensemble de pare-chocs (10) pour véhicule automobile, comprenant :
- une traverse (12) destinée à s'étendre suivant une direction transversale du véhicule automobile,
- au moins une platine (18, 20) destinée à être fixée à un longeron du véhicule automobile,
- au moins un absorbeur de chocs (14, 16) reliant la traverse (12) à la platine (18, 20), ledit absorbeur de choc (14,16) comprenant une partie tubulaire (44) en matériau composite, s'étendant selon un axe longitudinal, comprenant une extrémité amont (46) appliquée contre la platine (18,20) et une extrémité aval (48) appliquée contre la traverse (12), l'extrémité amont (46) et/ou l'extrémité aval (44) comprenant un épaulement (50) s'étendant sensiblement radialement à partir de la partie tubulaire (44),
- un dispositif de fixation (52) assurant la fixation de l'absorbeur (14, 16) à la traverse (12) ou la platine (18, 20) par au moins un moyen de fixation (66, 67),
**caractérisé en ce que** le dispositif de fixation (52) comprend au moins une pièce de fixation (58, 59) métallique comprenant une partie de fixation (62, 63), fixée à la platine (18, 20) ou à la traverse (12), et une partie de blocage (60, 61) s'étendant sur l'épaulement (50) de l'absorbeur (14, 16) de sorte que l'épaulement (50) est disposé entre la platine (18, 20) ou la traverse (12) et la partie de blocage (60, 61).

2. Ensemble selon la revendication 1, **caractérisé en ce que** la fixation entre la partie tubulaire (44) et la platine (18, 20) ou la traverse (12) se fait par écrasement de l'épaulement (50) par la partie de blocage (60, 61) de la pièce de fixation (58, 59) lors de la mise en place du moyen de fixation (66, 67).

3. Ensemble selon la revendication 2, **caractérisé en ce que** la pièce de fixation (58) comprend une partie de liaison (64) reliant la partie de fixation (62) à la partie de blocage (60), ladite partie de liaison (64) présentant une dimension selon l'axe longitudinal inférieure à la dimension selon l'axe longitudinale de l'épaulement (50).

4. Ensemble selon l'une quelconque des revendications 1 à 3, **caractérisé en ce que** le moyen de fixation (66, 67) entre la partie de fixation (62, 63) de la pièce de fixation (58, 59) et la traverse (12) ou la platine (18, 20) est une vis.

5. Ensemble selon l'une quelconque des revendications 1 à 4, **caractérisé en ce que** l'épaulement (50) s'étend à partir d'une paroi interne (54) ou externe (56) de la partie tubulaire (44).

6. Ensemble selon l'une quelconque des revendications 1 à 5, **caractérisé en ce que** la partie de blocage (60, 61) de la pièce de fixation (58, 59) est en forme d'anneau ou de disque, comprenant un contour sensiblement complémentaire de la section de la partie tubulaire (44).

7. Ensemble selon l'une quelconque des revendications 1 à 6, **caractérisé en ce que** le dispositif de fixation (52) comprend deux pièces métalliques (58, 59) comprenant chacune une partie de fixation (62, 63) et une partie de blocage (60, 61), telles que l'épaulement (50) soit entre les parties de blocage (60, 61) des deux pièces métalliques (58, 59).

8. Ensemble selon la revendication 7, **caractérisé en ce que** les parties de fixation (62, 63) des deux pièces métalliques (58, 59) sont superposées.

9. Ensemble selon l'une quelconque des revendications 7 ou 8, **caractérisé en ce que** la partie de blocage (60, 61) d'une des plaques métalliques (58, 59) s'étend contre la paroi de la partie tubulaire (44), opposée à la paroi comprenant l'épaulement (50).

10. Ensemble selon l'une quelconque des revendications 1 à 9, **caractérisé en ce que** tout ou une ou plusieurs parties du dispositif de fixation (52) viennent de matière avec la traverse (12) ou la platine (18, 20).

## Patentansprüche

1. Anordnung von Stoßfängern (10) für Kraftfahrzeug, umfassend:
- eine Traverse (12), dazu ausgebildet, sich in eine Querrichtung des Kraftfahrzeugs zu erstrecken,
- mindestens eine Platte (18, 20), zur Befestigung an einem Seitenträger des Kraftfahrzeugs ausgebildet,
- mindestens einen Stoßdämpfer (14, 16) zur Verbindung der Traverse (12) mit der Platte (18, 20), wobei der Stoßdämpfer (14, 16) einen rohrförmigen Teil (44) aus einem Verbundwerkstoff umfasst, sich in eine Längsachse erstreckt, ein vorgelagertes, gegen die Platte (18, 20) angebrachtes Ende (46) und ein nachgelagertes, gegen die Traverse (12) angebrachte Ende (48) umfasst, wobei das vorgelagerte Ende (46) und/oder das nachgelagerte Ende (44) eine Schulter (50) umfasst, welche sich im Wesentlichen ab dem rohrförmigen Teil (44) radial erstreckt,
- eine Befestigungsvorrichtung (52), die die Befestigung des Stoßdämpfers (14, 16) mit der Traverse (12) oder der Platte (18, 20) durch mindestens ein Befestigungsmittel (66, 67) gewährleistet,
**dadurch gekennzeichnet, dass** die Befestigungsvorrichtung (52) mindestens ein Befestigungsbauteil (58, 59) aus Metall umfasst, welches einen an der Platte (18, 20) oder der Traverse (12) befestigten Befestigungsabschnitt (62, 63) und einen Riegelabschnitt (60, 61) umfasst, welcher sich auf die Schulter (50) des Stoßdämpfers (14, 16) derart erstreckt, dass die Schulter (50) zwischen der Platte (18, 20) oder der Traverse (12) und dem Riegelabschnitt (60, 61) angeordnet ist.

2. Anordnung nach Anspruch 1, **dadurch gekennzeichnet, dass** die Befestigung zwischen dem rohrförmigen Teil (44) und der Platte (18, 20) oder der Traverse (12) durch Niederdrücken der Schulter (50) durch den Riegelabschnitt (60, 61) des Befestigungsbauteils (58, 59) beim Einsetzen des Befestigungsmittels (66, 67) erfolgt.

3. Anordnung nach Anspruch 2, **dadurch gekennzeichnet, dass** das Befestigungsbauteil (58) einen Verbindungsabschnitt (64) umfasst, welcher den Befestigungsabschnitt (62) mit dem Riegelabschnitt (60) verbindet, wobei der Verbindungsabschnitt (64) eine Abmessung in seiner Längsachse kleiner als die Abmessung in der Längsachse der Schulter (50) aufweist.

4. Anordnung nach einem der Ansprüche 1 bis 3, **dadurch gekennzeichnet, dass** das Befestigungsmittel (66, 67) zwischen dem Befestigungsabschnitt (62, 63) des Befestigungsbauteils (58, 59) und der Traverse (12) oder der Platte (18, 20) eine Schraube ist.

5. Anordnung nach einem der Ansprüche 1 bis 4, **dadurch gekennzeichnet, dass** die Schulter (50) sich ab einer Innen- (54) oder Außenwandung (56) des rohrförmigen Teils (44) erstreckt.

6. Anordnung nach einem der Ansprüche 1 bis 5, **dadurch gekennzeichnet, dass** der Riegelabschnitt (60, 61) des Befestigungsbauteils (58, 59) ring- oder scheibenförmig ist, mit einer Kontur, welche im Wesentlichen ergänzend zum Querschnitt des rohrförmigen Teils (44) ist.

7. Anordnung nach einem der Ansprüche 1 bis 6, **dadurch gekennzeichnet, dass** die Befestigungsvorrichtung (52) zwei Metallteile (58, 59) umfasst, die jeweils einen Befestigungsabschnitt (62, 63) und einen Riegelabschnitt(60, 61) umfassen und derart ausgebildet sind, dass die Schulter (50) zwischen den Riegelabschnitten (60, 61) der beiden Metallteile (58, 59) gelagert ist.

8. Anordnung nach Anspruch 7, **dadurch gekennzeichnet, dass** die Befestigungsabschnitte (62, 63) der beiden Metallteile (58, 59) übereinander gelagert sind.

9. Anordnung nach einem der Ansprüche 7 oder 8, **dadurch gekennzeichnet, dass** der Riegelabschnitt (60, 61) einer der Metallplatten (58, 59) an der Wandung des rohrförmigen Teils (44) entlang verläuft, welche gegenüber der Wandung mit der Schulter (50) angeordnet ist.

10. Anordnung nach einem der Ansprüche 1 bis 9, **dadurch gekennzeichnet, dass** alle oder ein Teil oder mehrere Teile der Befestigungsvorrichtung (52) eitnstückig mit der Traverse (12) oder der Platte (18, 20) ausgebildet sind.

## Claims

1. Bumper assembly (10) for motor vehicle, comprising:
- a cross member (12) intended to extend along a transverse direction of the motor vehicle,
- at least one plate (18, 20) intended to be attached to a side member of the motor vehicle,
- at least one shock absorber (14, 16) connecting the cross member (12) to the plate (18, 20), said shock absorber (14,16) comprising a tubular portion (44) of composite material, extending along a longitudinal axis, comprising an upstream end (46) applied against the plate (18, 20) and a downstream end (48) applied against the cross member (12), the upstream end (46) and/or the downstream end (44) comprising a shoulder (50) extending substantially radially from the tubular portion (44),
- an attachment device (52) attaching the absorber (14, 16) to the cross member (12) or the plate (18, 20) by at least one attachment means (66, 67),
**characterised in that** the attachment device (52) comprises at least one metallic attachment part (58, 59) comprising an attachment portion (62, 63) attached to the plate (18, 20) or to the cross member (12), and a locking portion (60, 61) extending on the shoulder (50) of the absorber (14, 16) so that the shoulder (50) is arranged between the plate (18, 20) or the cross member (12) and the locking portion (60, 61).

2. Assembly according to claim 1, **characterised in that** the attachment between the tubular portion (44) and the plate (18, 20) or the cross member (12) is produced by the shoulder (50) being crushed by the locking portion (60, 61) of the attachment part (58, 59) when positioning the attachment means (66, 67).

3. Assembly according to claim 2, **characterised in that** the attachment part (58) comprises a connecting portion (64) connecting the attachment portion (62) to the locking portion (60), said connecting portion (64) having a dimension along the longitudinal axis less than the dimension along the longitudinal axis of the shoulder (50).

4. Assembly according to any one of claims 1 to 3, **characterised in that** the attachment means (66, 67) between the attachment portion (62, 63) of the attachment part (58, 59) and the cross member (12) or the plate (18, 20) is a screw.

5. Assembly according to any one of claims 1 to 4, **characterised in that** the shoulder (50) extends from an inner (54) or outer (56) wall of the tubular portion (44).

6. Assembly according to any one of claims 1 to 5, **characterised in that** the locking portion (60, 61) of the attachment part (58, 59) is ring- or disc-shaped, comprising a contour that is substantially complementary to the cross-section of the tubular portion (44).

7. Assembly according to any one of claims 1 to 6, **characterised in that** the attachment device (52) comprises two metallic parts (58, 59) each comprising an attachment portion (62, 63) and a locking portion (60, 61), such that the shoulder (50) is between the locking portions (60, 61) of the two metallic parts (58, 59).

8. Assembly according to claim 7, **characterised in that** the attachment portions (62, 63) of the two metallic parts (58, 59) are superimposed.

9. Assembly according to claim 7 or 8, **characterised in that** the locking portion (60, 61) of one of the metallic plates (58, 59) extends against the wall of the tubular portion (44), opposite the wall comprising the shoulder (50).

10. Assembly according to any one of claims 1 to 9, **characterised in that** all or one or several portions of the attachment device (52) are integral with the cross member (12) or the plate (18, 20).
